# EUROPEAN PATENT SPECIFICATION

(11) **EP 0 974 820 B1**
(45) Date of publication and mention of the grant of the patent: **20.07.2005**
(21) Application number: 99101423.4
(22) Date of filing: 27.01.1999
(51) Int. Cl.: G01L 1/02, G01L 1/20, G01L 1/22

(54) **Restraint-elastomeric cushion bearing apparatus for determining the load thereon**
Lager zur Aufnahme von Kräften mit eingespanntem Elastomerkissen
Appui de détermination de la force à coussin élastomérique enserré

(30) Priority: 22.07.1998 IT MI981692
(43) Date of publication of application: 26.01.2000
(73) Proprietor: FIP INDUSTRIALE S.P.A., I-35050 Selvazzano Dentro (Padova) (IT)
(72) Inventor: Chiarotto, Renato, 35030 Selvazzano Dentro (IT)
(74) Representative: Cicogna, Franco

(56) References cited:
- CH-A- 158 282
- DE-A- 3 502 275
- DE-A- 4 402 608
- FR-A- 1 438 366

## Description

### BACKGROUND OF THE INVENTION

The present invention relates to a restraint-elastomeric cushion bearing apparatus for determining the load thereon.

As is known, bridge poles and shoulders are frequently built, because of topographic reasons, on scarcely stable grounds; thus, it is necessary to perform periodic controls in order to monitor possible modifications, in order to perform timely corrective operations.

In order to carry out the above mentioned control operations, dynamometric bearing assemblies are frequently used, which are provided with suitable resilient elements coupled to strain gauges, conventionally called "load cells", adapted to detect the pressure applied along the main load axis.

However, the operation of the above mentioned load cells, which are arranged inside the bearing assembly, cannot be safely assured for the overall duration of the construction in which the load cell has been installed.

In fact, several physical phenomena, such as electrical discharges, aggressive environments, temperature variations, corrosion phenomena and the like can cause the load cell to malfunction.

Thus, from the above it should be apparent that in order to recover a proper operation, the load cell must be frequently replaced, with a consequent need of raising, at high cost, the bearing construction.

The document DE-A-3 502 275 discloses an apparatus having substantially the features of the preamble of claim 1.

The document CH-A-158 282 discloses to form a throughgoing hole in a housing of an elastomeric cushion bearing apparatus.

The document FR-A-1 438 366 discloses the use of a piston as a transmission means for guiding an expanding pressure to a pressure sensor.

### SUMMARY OF THE INVENTION

Accordingly, the aim of the present invention is to overcome the above mentioned drawbacks, by providing a restraint elastomeric cushion bearing apparatus for determining the load bearing thereon, which is specifically adapted to constantly hold under control or monitor the loads bearing thereon and which, simultaneously, allows the strain-gauge resilient element to be easily replaced without the need of raising the bearing construction.

According to one aspect of the present invention, the above aim is achieved by a restraint elastomeric cushion bearing apparatus according to claim 1 operatively coupled transmitting means for

Dependent claims 2 and 3 concern particular embodiments of the present invention.

### BRIEF DESCRIPTION OF THE DRAWINGS

Further characteristics and advantages of the present invention will become more apparent hereinafter from the following detailed disclosure, given by way of an illustrative but not limitative example, with reference to the accompanying drawings, where:

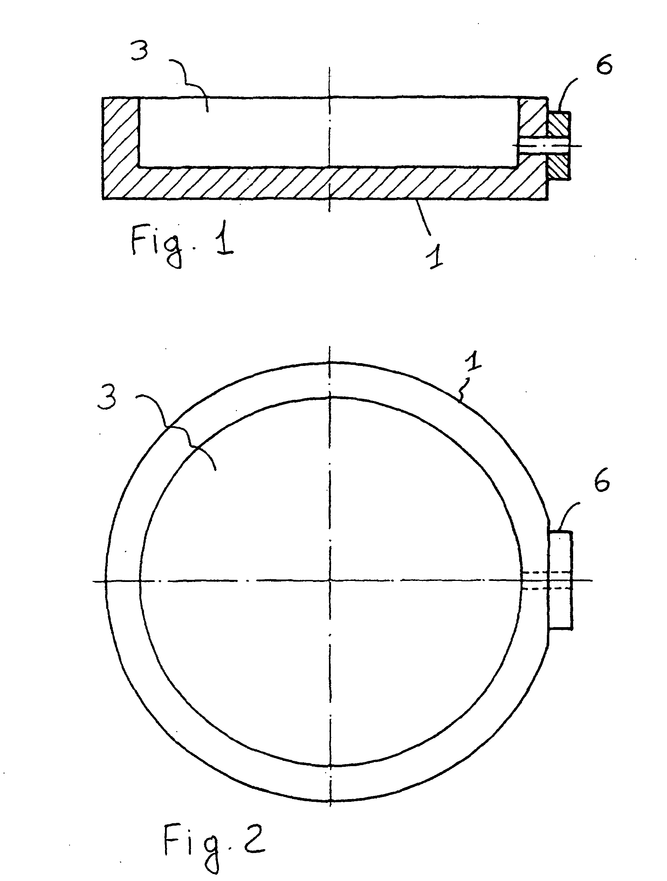

Figure 1 is a schematic cross-sectional view of the bottom element;
Figure 2 is a top plan view of the bottom element;
   and
Figure 3 is a further schematic, cross-sectional view of the bearing apparatus according to the present invention, in its assembled condition.

### DESCRIPTION OF THE PREFERRED EMBODIMENTS

In the following disclosure reference will be mainly made to a preferred embodiment of the invention, which has been illustrated by way of a not limitative example of several possible variations of the invention.

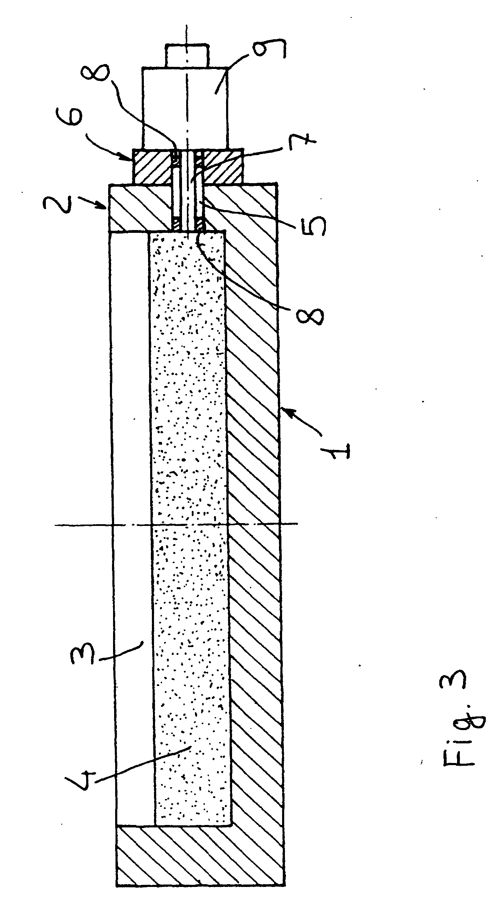

With reference to the number references of the above mentioned figures, the restraint elastomeric cushion bearing apparatus according to the present invention, which has been generally indicated in Figure 3, comprises a bottom element 1, having a substantially circular configuration, with perimetrical edges 2 defining a cavity 3, into which an elastomeric cushion 4 can be introduced.

On the perimetrical edge 2, at the surface thereof contacting the elastomeric cushion 4, a throughgoing hole 5 is formed, e.g. by using a machine tool.

On the outer perimetrical edge 2, at said hole 5, a support plate 6 for supporting a strain-gauge cell and guiding a piston 7 is welded.

Said piston 7 is arranged inside said throughgoing hole 5, being guided by two bushings 8.

The strain gauge-resilient element assembly, which also comprises a connector 9 for reading data, is then connected to the plate 6 by connecting screws.

As above mentioned, both the throughgoing hole 5 and the assembling of the plate 6 are performed through the thickness of the perimetrical wall of the bottom element 1 of the bearing apparatus, thereby a very compact construction will be obtained, allowing to fit the bearing apparatus to a range of loads to be supported thereby.

A further important aspect of the invention is that it allows to replace the strain gauge cell, arranged outside of the apparatus, in a case of a failure, without the need of removing the bearing construction (i.e. without raising the construction or elements supported thereon).

The disclosed bearing apparatus can be easily made starting from easily available elements and materials and, moreover, is very competitive from a mere economic standpoint.

From the above disclosure it should be apparent that the invention fully achieves the intended aim and objects.

Moreover, all of the details and shapes, can be replaced by other technically equivalent elements.

In practicing the invention, the used materials, provided that they are compatible to the intended use, as well as the contingent size and shapes can be any, depending on requirements.

## Claims

1. A restraint-elastomeric cushion bearing apparatus for determining the load thereon, comprising a bottom element (1) having a substantially circular configuration with a perimetrical wall, defining a cavity (3) housing a resilient elastomeric cushion (4), wherein a radial throughgoing hole (5) is formed through said wall, **characterized in that** a supporting plate (6) having a substantially central throughgoing hole is welded onto the outside surface of said wall so that said hole (5) of said wall and said central hole of said plate are substantially aligned and correspond to each other so as to define a throughgoing hole through said wall and said plate (6), that in said throughgoing hole is slidably housed a piston (7) for transmitting an expanding pressure of said elastomeric cushion (4) to a resilient element-strain gauge assembly, said piston being slidably guided in said throughgoing hole by two bushings (8), that said resilient element-strain gauge assembly is removably mounted onto the outer side of said supporting plate (6).

2. An apparatus according to Claim 1, **characterized in that** said resilient element-strain gauge assembly comprises an electric resistance strain gauge, and a data read-out connector (9).

3. An apparatus according to Claim 1, **characterized in that** said resilient element-strain gauge assembly is removably coupled to said plate (6) by screws.

## Patentansprüche

1. Lager mit eingespanntem Elastomerkissen zur Ermittlung von darauf einwirkenden Kräften, umfassend ein Bodenelement (1) von im Wesentlichen kreisförmiger Konfiguration mit einer Umfangswand, die einen Raum (3) definiert, in dem sich ein federndes Elastomerkissen (4) befindet, wobei ein radiales Durchgangsloch (5) in der Wand ausgebildet ist, **dadurch gekennzeichnet, dass**: eine Stützplatte (6), die ein im Wesentlichen mittiges Durchgangsloch aufweist, an der Außenseite der Wand angeschweißt ist, dergestalt, dass das Loch (5) der Wand und das mittige Loch der Platte im Wesentlichen aufeinander ausgerichtet sind und miteinander übereinstimmen, dergestalt, dass ein Durchgangsloch durch die Wand und die Platte (6) hindurch entsteht; dass in dem Durchgangsloch verschiebbar ein Kolben (7) untergebracht ist, der einen Ausdehnungsdruck des Elastomerkissens (4) zu einem Federelement-Dehnungsmessgerät überträgt, wobei der Kolben verschiebbar in dem Durchgangsloch durch zwei Büchsen (8) geführt wird; und dass das Federelement-Dehnungsmessgerät abnehmbar an der Außenseite der Stützplatte (6) angebracht ist.

2. Lager nach Anspruch 1, **dadurch gekennzeichnet, dass** das Federelement-Dehnungsmessgerät ein mit elektrischem Widerstand arbeitendes Dehnungsmessgerät sowie einen Datenausleseanschluss (9) umfasst.

3. Lager nach Anspruch 1, **dadurch gekennzeichnet, dass** das Federelement-Dehnungsmessgerät abnehmbar an der Platte (6) mittels Schrauben angebracht ist.

## Revendications

1. Dispositif de support et d'encastrement à coussinet élastomère destiné à déterminer la charge qui s'y exerce, comprenant un élément inférieur (1) présentant une forme sensiblement circulaire avec une paroi périmétrique délimitant une cavité (3) dans laquelle est logé un coussinet élastomère élastique (4), un trou radial traversant (5) étant aménagé à travers ladite paroi, **caractérisé en ce qu'**une plaque de support (6) ayant un trou traversant sensiblement central est soudée sur la surface externe de ladite paroi de façon à ce que ledit trou (5) de ladite paroi et ledit trou central de ladite plaque soient en correspondance l'un avec l'autre de façon à définir un trou traversant à travers ladite paroi et ladite plaque (6), **en ce que**, dans ledit trou traversant, est logé, de manière coulissante, un piston (7) permettant de transmettre la pression d'expansion dudit coussinet élastomère (4) vers un ensemble de jauge de contrainte à élément élastique, ledit piston étant guidé de manière coulissante dans ledit trou traversant à l'aide de deux bagues de paliers (8), **en ce que** ledit ensemble de jauge de contrainte à élément élastique est monté de manière amovible à l'extérieur de ladite plaque de support (6).

2. Dispositif selon la revendication 1, **caractérisé en ce que** ledit ensemble à jauge de contrainte à élément élastique comprend une jauge de contrainte à résistance électrique et un connecteur (9) pour la lecture des données

3. Dispositif selon la revendication 1, **caractérisé en ce que** ledit ensemble à jauge de contrainte à élément élastique est relié de manière amovible à ladite plaque (6) à l'aide de vis.
